# EUROPEAN PATENT APPLICATION

(11) **EP 1 253 501 A2**
(43) Date of publication of application: **30.10.2002**
(21) Application number: 01121848.4
(22) Date of filing: 11.09.2001
(51) Int. Cl.: G06F 1/00

(54) **Method and system for scanning and cleaning known and unknown computer viruses, recording medium and transmission medium therefor**

(30) Priority: 29.04.2001 CN 01117726
(71) Applicant: Beijing Rising Technology Corporation Limited, Beijing 100080 (CN)
(72) Inventor: Tang,Zhaomiao, c/o Beijing Rising Technology Co Lt, Haidian District, Beijing 100080 (CN)
(74) Representative: Goddar, Heinz J., Dr.

(57) **Abstract**

A method, system and mediums for scanning and cleaning computer viruses. Said method comprises the steps of: simulating in a computer a virtual computer circumstance that the computer viruses reside; providing a plurality of infected objects or baits to be infected by computer viruses for inducing virus infection; loading a target object to be scanned into said simulated virtual computer circumstance; activating the target object to be scanned in said simulated virtual computer circumstance to induce the viruses possibly attached on said target object to infect the plurality of objects to be infected and generating standard samples which have been infected; comparing the plurality of objects after processing in the activating step with the plurality of objects to be infected originally provided, determining whether there is any change or not, if yes, the target object to be scanned contains virus, otherwise the target object to be scanned is free of virus. Said method further comprises the steps of: analyzing and learning from the viruses by analyzing the generated standard samples and extracting information and knowledge on the viruses when it is determined that said target object to be scanned contains a virus; and cleaning viruses from the infected target object by removing the virus' s body and modifying key information which has been changed by said virus on the basis of said information and knowledge on the viruses and on the basis of the modification that viruses have made to said infected objects ,i.e. the baits. The known and unknown viruses can be cleaned effectively.

## Description

### Field of the Invention

This invention relates to software field for scanning and cleaning (that is, detecting and killing) computer viruses, and in particular, relates to a method of scanning and cleaning unknown viruses, and the computer system implementing the same, and the recording medium and transmission medium for storing and transmitting this anti-virus software.

For a long time, computer viruses have become a big problem harassing people who use computers. Because of the characteristics of infectivity, self-replication and destructibility of the computer viruses, computer viruses have threatened the normal usage of computers, for example, causing loss or modification of data, damaging files, destroying software, and so on. People often use various anti-virus software to scan and clean them.

So far, commonly used anti-virus products can only detect and clean viruses of known types, that is, for various known viruses, the characteristic codes thereof are already known. In this case, the files possibly carrying viruses are scanned and searched for the viruses' characteristic codes. Once a characteristic code is found, it is determined that the file has been infected, thereby goes to clean the viruses. However, this method can not detect viruses of unknown kinds. Only after the new viruses are discovered and analyzed by virus analyzers, can the characteristic codes be acquired. Therefore, the new viruses can' t be recognized and detected until the characteristic codes are added into the conventional anti-virus software.

Since the emergence of computer viruses, viruses have been detected by scanning eigenvalue, that is, when a new virus is discovered, virus analyzers extract one cluster or several clusters of characteristic codes from virus' s program body as its eigenvalue, then the virus-scanning software examines whether a file is infected by detecting the presence of the eigenvalue of the viruses in the file. Though anti-virus techniques have made some improvement in the past decade, it is not changed that the method of scanning eigenvalue is the basis of virus-scanning software. The fatal disadvantage of the eigenvalue scanning method (or the virus scanning software) is that only if a virus is discovered and analyzed, and characteristic codes are added into the virus definition libraries by the virus analyzers, can the virus scanning software recognize the virus of the same kind. In other words, the virus-scanning software always falls behind viruses, and the viruses have to be analyzed by the virus analyzers before the software works against this virus.

Conventional anti-virus techniques that can detect some unknown viruses, such as the wide-spectrum scanning method, the heuristic scanning methods etc., are based on sufficient classical virus characteristic codes, and some of them run codes of the target object to be scanned for virus on a virtual machine, to empirically judge whether the target is infected and to judge whether the object target has suspicious codes. For example, some domestic or foreign anti-virus companies have developed some methods for scanning unknown viruses, all of which are based on the same idea that they summarize the common ways of viruses' attacking, such as write to disk, and write to files, then scan for these characteristics codes in the target object. These methods actually are of behavior characteristic definitions, and named as inductive virus-scanning method or heuristic virus-scanning method. Such methods can detect some unknown viruses and make alarm, but it has poor effect and high rates of misreporting and failing to report . There are two reasons for this. The first one is that the attacking methods of viruses are various and difficult to be enumerated. And the second one lies in that the attacking methods of viruses are legal to the systems in the same way as lots of software tools, thus it is hard to discriminate between them. With this kind of methods, some of the unknown viruses can be detected and alarmed. However, because of the high rate of misreporting, these methods will bring users unnecessary concerns. And the fatal disadvantage lies in that although it can detect viruses, it is unable to clean the virus. If a target is attacked by a virus, it has to shutdown the computer until the anti-virus software is upgraded. Furthermore, they can not surely determine whether the target objects(files, boot sector, memory and etc.) are infected, but only tells "Possible infected" . Up to now, anti-virus products have not been available for cleaning unknown viruses or cleaning known ones without virus characteristic libraries (database or code base).

### Summary of the invention

In view of the above problems of conventional anti-virus software, an object of the present invention is to provide a method, system that can effectively detectand clean known and unknown viruses and the recording medium or transmission medium therefor. It makes use of the primary characteristic of the viruses, the infectivity, to detect virus' presence so as to solve the problems of detecting unknown viruses effectively. It can detect almost all known and unknown viruses and clean them. It will completely change the situation that viruses could not be cleaned until they are analyzed manually. The present invention can detect and clean unknown viruses in time, so as to greatly reduce the possibility of viruses' damaging to information and data. Skipping manual analysis to most known and unknown viruses, a lot of labor and money will be saved..

The present invention provides a method for scanning and cleaning computer viruses, comprising the steps of: simulating in a computer a virtual computer circumstance that the computer viruses reside; providing a plurality of objects or baits to be infected by computer viruses for inducing virus infection; loading a target object to be scanned into said simulated virtual computer circumstance; activating the target object to be scanned in said simulated virtual computer circumstance to induce the viruses possibly attached on said target object to infect the plurality of objects to be infected and generating standard samples which have been infected; comparing the plurality of objects after processing in the activating step with the plurality of objects to be infected originally provided, determining whether there is any change or not, if yes, the target object to be scanned contains virus, otherwise the target object to be scanned is free of virus.

The method for scanning and cleaning computer viruses according to the present invention further includes the steps of:analyzing and learning from the viruses by analyzing the generated standard samples and extracting information and knowledge on the viruses when it is determined that said target object to be scanned contains a virus; and cleaning viruses from the infected target object by removing the virus' s body and modifying key information which has been changed by said virus on the basis of said information and knowledge on the viruses and on the basis of the modification that viruses have made to said infected objects, i.e. the baits.

The present invention further provides a computer system including a general computer for scanning and cleaning computer viruses, comprising: a computer simulation unit for simulating a virtual computer circumstance that the computer viruses resides; a plurality of objects or baits to be infected by computer viruses for inducing virus infection; a control unit for loading a target object to be scanned into said simulated virtual computer circumstance; a virus infection inducing unit for activating the target object to be scanned in said simulated virtual computer circumstance to induce the viruses possibly attached on said target object to infect the plurality of objects to be infected and generating standard samples which have been infected; and a virus decision unit for comparing the plurality of objects after processing in virus infection inducing unit with the plurality of objects to be infected originally provided, determining whether there is any change or not, if yes, the target object to be scanned contains virus, otherwise the target object to be scanned isfree of virus.

The system for scanning and cleaning computer viruses according to the present invention further includes: a virus analyzing and learning means for analyzing the generated standard samples and extracting information and knowledge on the viruses when it is judged that there is virus; and a virus cleaning unit for cleaning viruses from the infected target object to be scanned by removing virus' s body and modifying key information which has been changed by said virus according to said information and knowledge on the viruses and on the basis of the modification that viruses have done to said infected objects ,i.e. the baits.

The present invention further provides a computer readable recording medium for causing a computer to execute the steps of the method described above for scanning and cleaning computer viruses according to the present invention. Furthermore, the present invention provides a transmission medium for causing a computer to execute the steps of the method described above for scanning and cleaning computer viruses according to the present invention via network transmission.

### Brief description to the drawings:

Figure 1 illustrates a block diagram of the framework of the computer system for scanning and cleaning computer viruses according to the present invention.

Figures 2A-2C are the flowcharts of the method for scanning and cleaning computer viruses according to the present invention.

### Detailed description to the preferred embodiments:

A computer virus is so named for its infectivity, which is the most essential characteristic of a virus. If a program has infectivity, it is determined to be carrying viruses. Thus it is the most effective method to identify a virus by identifying a program' s infectivity. However, due to the virus' infectivity, to identify the infectivity means to let the virus infect some objects. If this identification is carried out in a real circumstance, it means that the virus is spreading during scanning virus. So it must be carried out in virtual circumstance to verify whether a target object to be scanned has infectivity.

The present invention makes use of the infectivity of the viruses, puts the object which has been suspicious to carry virus into a virtual computer circumstance that the computer viruses resides and reproduces, activates it and induces it to infect the baits. Further, because various viruses may require certain infection conditions, such as the size and content of the target object, the invention provides all kinds of baits, including bait objects that have different sizes or contents. For example, files like format.com and sort.com are used to induce viruses of DOS COM type. Files like debug.exe and lable.exe are used to induce viruses of DOS EXE type. A floppy disk boot sector, a hard disk boot sector, or a hard disk primary boot sector is simulated to induce viruses of DOS BOOT type. And files like notepad.exe and word.exe are used to induce viruses of WINDOWS PE type, and so on. Different bait objects are used to satisfy viruses' requirement as possible as they can.

The present invention directs to a new technique for reproducing, detecting or scanning, and cleaning virus in a virtual computer circumstance, which is a kind of anti-virus method according to behavior-result. This invention uses a virtual computer circumstance to simulate a real computer circumstance, in which all the processes of viruses' replication and spreading are realized. At the same time the reproducing and spreading procedure of the virus is monitored, the virus' s methods of infection are learned, and the converse process of the infection can be deduced, which forms the method of cleaning such viruses. Below are the detailed steps. First, a virtual circumstance is established which the virus resides and reproduces, and the suspicious target object to be scanned is put into the virtual circumstance. Second, the suspicious object is activated. If it really carries a virus, the virtual circumstance will be an infected one. Then various operations are performed to the baits in the virtual circumstance to induce the viruses to infect them as possible as it can. In other words, an experiment of the virus' s replication and infection is done in the virtual circumstance. If the baits are infected by the virus, the target object to be scanned does carry a virus and the baits infected by the virus become the standard samples. Third, if the previous step of replication and infection experiment succeeds, then the standard samples will be analyzed by a program instead of a virus analyzer, and information required for scanning and cleaning the virus is extracted from the standard samples. Fourth, the information obtained from analyzing the standard samples with said program is applied to the infected target object which carries the virus, to clean the virus.

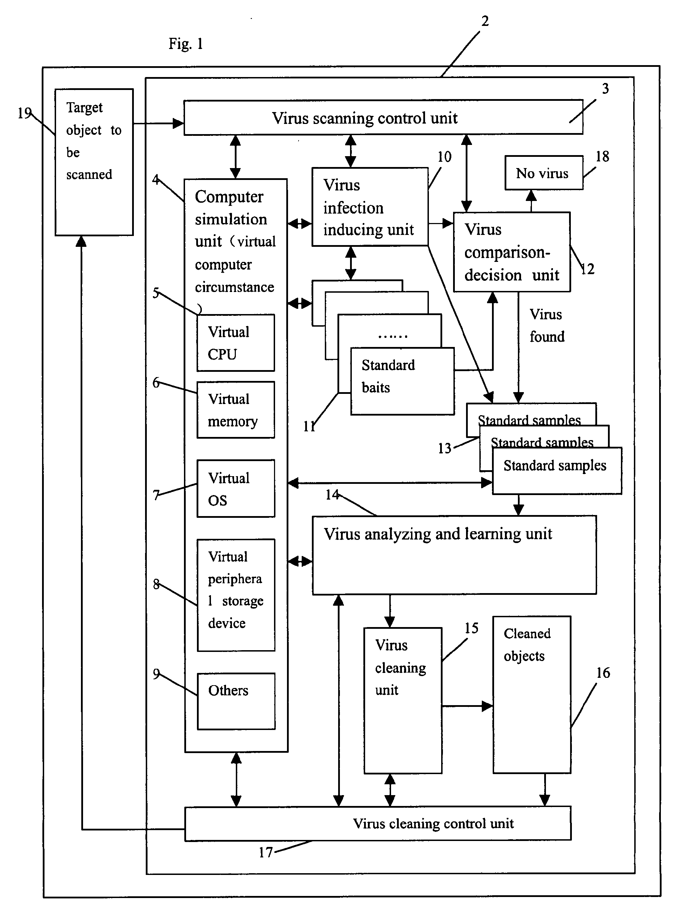

Figure 1 illustrates the block diagram of the computer system for scanning and cleaning computer viruses according to one preferred embodiment of the present invention. As shown in figure 1, a general computer system 1 contains a virus scanning-cleaning unit 2 according to the present invention that can be executed by the computer. The computer system 1 include a general CPU, a memory, an Operation System (OS), a peripheral storage devices (hard disk, floppy disk, and so on)(not shown in figure 1). The whole program of the virus scanning-cleaning unit 2 is executed by the CPU in computer system 1. The computer system further includes a target object to be scanned 19, which may be a file in the hard disk or floppy disk or a boot sector of the hard disk or floppy disk in the computer system 2, and even files and data downloaded and transmitted through the Internet that possibly carry a virus.

As shown in Figure 1, the virus scanning-cleaning unit 2 includes a virus scanning control unit 3 for inputting the target object to be scanned 19 to the simulated computer circumstance and for controlling the processes in all the virus-scanning components; a computer simulation unit 4, i.e. a virtual computer, for creating a whole simulated computer system as a virtual circumstance in which the viruses replicates and spreads, the created computer system may include a virtual CPU 5, a virtual memory 6, a virtual Operation System (OS) 7, virtual peripheral storage devices (hard disk, floppy disk, and so on) 8, and other portions of system resources 9 required for the virus' s living, replication and spreading, such as system time; one or more standard baits(i.e. the target object possibly to be infected by the computor viruses) for inducing virus infection; an virus infection inducing unit 10 for loading the target object to be scanned 19 into said virtual computer 4 and performing operation, and using the standard baits 11 to cause the viruses possibly carried by the target object to be scanned 19 to infect the standard baits 11 and the boot sectors of the virtual hard disk, floppy disk and the like of the simulated computer circumstance, thus generating infected standard samples 13; a virus comparison-decision unit 12 for checking whether the boot sectors of the virtual hard disk, floppy disk or the like of the simulated computer circumstance is changed before and after the step of virus inducing, and comparing the standard samples after infection 13 with the standard baits 11 before infection to determine whether there is any change or not, if yes, it is determined that the target object to be scanned 19 contains virus, otherwise there is no virus 18.

The virus-cleaning part of the virus scanning-cleaning unit 2 includes a virus-cleaning control unit 17 which is used to control the processes in all the virus-cleaning components; a virus analyzing and learning unit 14 for analyzing the modification by the virus' s infection according to the standard baits 11 and the infected standard samples 13, and to learn knowledge about the virus; and a virus-cleaning unit 15 for killing or cleaning the virus adaptively on the basis of the knowledge obtained from the virus analyzing and learning unit 14 and generate the object 16 from which the virus has been cleaned. The cleaned object 16 can be used to overwrite the input target object to be scanned 19 by the virus-cleaning control unit 17 to eliminate the virus.

According to one embodiment of the present invention, the virus-scanning control unit 2 and the virus-cleaning control unit 17 may be integrated as one single control unit to monitor all the above mentioned virus scanning and cleaning processes.

The virtual computer circumstance created by the computer simulation unit 4 includes the virtual machine 5(virtual CPU), the virtual operating system 7, the virtual peripheral computer storage devices 8, the virtual physical memory 6, and so on. In a word, all the computer resources required for the virus' s residence will be simulated; objects possibly carrying viruses are those that may have been infected by viruses theoretically. Objects possibly carrying viruses are put into the virtual circumstance and activated under appropriate conditions.

The virtual CPU 5 may also be called as softcpu() (a CPU implemented or simulated by software). A softcpu() is an interpreter for real CPU instructions. It interprets and executes the program like a real CPU, and it can understand each line of codes, interpret and execute them correctly. Theoretically, the softcpu() can execute all the codes that a real CPU can do, or interpret and execute all the programs that a real CPU can do; it can recognize all the instructions that a real CPU can do, or act the same as a real CPU under any statuses. All objects the real CPU operates on (such as BIOS chips and disks) are real ones, while those the virtual CPU operates on (such as BIOS chips and disks) are virtual ones.

In addition, the softcpu() is just a function interpreting the instructions of a real CPU, which may be written in the assemble language, the C language or other languages. In one embodiment of the present invention, it is written in the C language for consideration of portability and maintainability.

The softcpu() would simulate an Intel' s CPU if a virus in an Intel computer is to be scanned; it would simulate a Macintosh CPU if a virus in a Macintosh computer is to be scanned.

All programs run in a specific operating system, so do viruses. Virtual operating system 7 is to simulate the operating system on which the virus runs. The virtual operating system 7 may include multiple operating system required for viruses' running, such as a virtual operating system for DOS, a virtual operating system for WINDOWS 95, or a virtual operating system for UNIX, and so on. To enhance the efficiency, in one embodiment of the present invention, the virtual operating system 7 only simulates the necessary kernel of the operating system for running the viruses.

For DOS viruses, the virtual operating system for DOS would be selected; for Windows 95 viruses, the virtual operating system for WINDOWS 95 would be selected.

The computer simulation unit 4 according to this invention creates virtual peripheral computer storage devices 8, such as hard disks or floppy disks. In the virtual computer circumstance, all writing or reading to the peripheral storage device in the program of the object to be scanned are to the virtual ones, which means, the infection and damage to files and data in the disks caused during the virtual program running are infection and damage to files and data in the virtual disks.

In one embodiment of the present invention, the said virtual computer peripheral storage device 8 includes a function or program unit 8 called by the computer simulation unit 4, to create a virtual hard disk. The primary function of the virtual computer peripheral storage device 8 is to assign an area of required size in the memory, and simulate, according to specific requirement, a virtual hard disk in the memory area, which has the same structure as a normal one, such as having three-dimension space by sector number, track number and cylinder number, the primary boot sector and its corresponding blank sector of the 0 track, and next the boot sector, the File Allocation Table (FAT), the root directory area, and the necessary system files (i.e., IO.SYS, MSDOS.SYS, COMMAND.COM are required for the DOS system), as well as bait files for testing (i.e., files like DOSEXE.EXE, DOSCOM.COM are required for viruses of DOS files type). The data in the virtual hard disk, which are useful for the scanning-cleaning system of the invention, only occupy an memory area of a size from tens of kilobytes to several hundred kilobytes, while a normal hard disk has a capacity from several megabytes to several gigabytes, most of which are not used in the system according to the present invention. So in one embodiment of the present invention, to simulate a hard disk with the size from several megabytes to several gigabytes, only a block of memory of size from tens of kilobytes to several hundred kilobytes is required. Since only a little memory is required to simulate a hard disk of large capacity, the hard disk required for this system may be realized on a general purpose computer. Furthermore, because the real hard disk will not be accessed during the period of scanning and cleaning , and the virtual hard disk is actually in a small area of the memory, the processing speed will be high and time will be saved. In addition, the virtual hard disk is just a part of memory, the real disk will not be infected nor damaged, the physical characteristics of the memory will not be destroyed, so it is harmless to the user' s system.

According to one further preferred embodiment of the present invention, when unit 8 is used to simulate a hard disk, a global structure variable Hard_Disk_Struct may be predefined to control the specification of the simulated hard disk, such as a blank disk, a boot disk, a disk containing system files and bait files.

The said virtual device 8 can also simulate a floppy disk primarily by assigning an area of memory of required size and configure the virtual floppy disk in the memory area to have the same structure as a normal one, such as having the boot sector, the File Allocation Table (FAT), the root directory area, the necessary system files (i.e., IO.SYS, MSDOS.SYS, COMMAND.COM for DOS system), and bait files for testing (i.e., files like DOSEXE.EXE, DOSCOM.COM) , for which all data required just occupy a size of tens of kilobytes. In one embodiment of the present invention, an global structure variable, floppy_disk_struct, may be predefined to control the specification of the virtual floppy disk, such as a blank disk, a boot disk, a floppy disk containing system files and bait files, for example, floppy disks of sizes of 360 kilobytes, 720kilobytes, 1.2 megabytes, 1.44 megabytes may be created according to the global variable.

In the same way, hard disks or floppy disks of any other operating systems may be simulated. The above flexible implementation will decrease the consumption of the system time, and in case of being called, the virtual peripheral device 8 uploads required data to the designated memory area.

All the above program units , including the virtual CPU 5, the virtual memory 6 and the virtual OS 7, can be realized by a person skilled in the art with known programming languages. They includes all kinds of instructions to simulate a CPU, all kinds of management and accessing operations to the memory, and all kinds of data structures and implementing codes of function services of the operating system, all of which may be implemented by available programming techniques, so the details thereof are omitted.

To activate the target object to be scanned is to activate the virus contained in the target object to behave as a virus. For example, if the target object is an executable binary file (a DOS EXE file, a DOS COM file, a DOS BAT file, or a WINDOWS NE or PE file), to activate means to execute; if the target object is a document file such as a WORD file with executable macros, then to activate it means to open it in the way that the macros can be executed.

The above standard bait may also include setting a virtual system time, including various date and time, to induce viruses which are sensitive to date and time, such as the CIH virus (attacking on April 26), the Friday 13^{th}, and so on. As illustrated in Figure 1, the scanning part of the virus scanning-cleaning program 2 provides a set of standard baits, which includes several standard baits 11 or bait sets. The baits refer to the known objects that are possible to be infected by viruses. In one embodiment of the present invention, the baits are DOS programs for DOS viruses ; WINDOWS 95 programs for WINDOWS 95 viruses; WORD documents for WORD viruses; and so on. The baits are executable entities of the same type as the target objects whatever the target objects are. The baits are clean and all sizes, content, structures and behavioral functions thereof are known, while whether the target object carries a virus is unknown before it is scanned. So their sizes, content, structures and behavioral functions are unknown if they really carry viruses.

In addition, the above baits 11 can not be selected freely, but must be executable entities that may be infected by many known viruses tested by lots of experiments for known viruses. Their sizes, content are "delicious" for viruses, that is, they are apt to be infected. If the baits are infected by the virus, information can be extracted therefrom. In a word, baits are known executable entities apt to be infected, and the bait set is a set of known executable entities of all kinds which are apt to be infected.

Specifically, according to one embodiment of the present invention, the standard baits 11 are configured to include, for example, a bait set of DOS COM type which includes a plurality of bait files which should have different sizes from 1 kilobytes to 60 kilobytes (1 kilobytes, 2.5 kilobytes, 12 kilobytes, 20 kilobytes, 30 kilobytes, 40 kilobytes, and so on); the first instruction of the files in the bait set should be JMP, CALL, MOV, and XOR respectively; the files in the bait set also should have different time, date and attributes to induce viruses of different types, which are sensitive to them.

The above standard baits can be configured to include a bait set of DOS EXE type, which include some bait files, of which the file headers have sizes of 0x20, 0x200, 0x400, 0x600, or 0x800; and which have sizes of 4 KB, 10 KB, 20 KB, 40 KB, or 80 KB; and of which the last pages have sizes of 0x00, 0x03, 0x80, 0x87, 0x100, or 0x198; and of which the numbers of relocation items are 0x00, 0x01, 0x02, 0x04, or 0x10, respectively, but do not completely occupy the relocation item table; and of which the CS and IP registers should have various values; and the stack' s location of the program body can be, for example, at the head, in the middle, at the tail of the program body, or next to the program body(out of the program body).

The above standard baits can be configured to include a bait set of boot type that include sets of boot sectors or primary boot sectors of different versions for MSDOS, PCDOS, DRDOS, WIN9X systems. Actually, they are the virtual hard disks or floppy disks containing boot sectors or primary boot sectors of different versions for MSDOS, PCDOS, DRDOS, or WIN9X to induce viruses of BOOT type created by the computer simulation unit 4.

Similarly, the above standard baits can be configured to include bait sets for MACRO viruses that include WORD documents of various sizes and types to induce MACRO viruses to infect.

As illustrated in Figure 1, the virus infection-inducement unit 10 (also called as virus sample-creating machine) is a function unit that uses all kinds of above bait sets to perform the process for inducing infection of viruses, that is, to run the files to be scanned and the possible viruses attached therein so as to let the standard host files (i.e. all the above baits) be infected by the viruses as possible as it can. Then the virus-identifying unit 12 determines that if there are any baits infected in virus sample-creating machine 10. Specifically, the virus-identifying unit 12 compares the baits after running the target object to be scanned in virus infection-inducing unit 10 with the respective baits before the running, to examine for any change. If there is any bait change before and after the running, the target object is determined to carry a virus, and the changed bait becomes a virus sample. In other words, if the virus sample-creating machine 10 has not created the samples 13, the target objects is clean; otherwise, the target object carries a virus and the standard host file(the bait) becomes a standard sample, which contains all information for cleaning the virus. According to one embodiment of the present invention, if a DOS virus resides in the above virtual memory of the above virtual DOS system, the virus sample-creating machine 10 operates on the baits of the DOS EXE, DOS COM types by executing, opening, reading, closing, or searching, etc., to induce the virus in the memory to infect the baits as possible as it can. In case of being modified or infected, the target object becomes a standard sample 13.

For viruses of document type, the bait files having been infected are standard samples themselves. But for viruses of boot sector type, the virus sample-creating machine 10 creates the standard samples according to the boot sector information of the virtual hard or floppy disks, which have been changed by the virus.

The said standard sample 13 refers to the standard bait or host that has been infected by the virus. A standard host is an executable body with known size, content and structure known by virus analyzers, which is suitable for carrying a virus under appropriate infection conditions.

As illustrated in Figure 1, in one embodiment of the present invention, the virus-learning machine 14 in the virus cleaning part according to the invention (also called as standard sample analyzing machine) compares the above standard baits 11 with the created standard samples 13, analyzes the samples, and extracts all information for the virus or information required to clean the virus. This process is called as the learning process of the virus-learning machine. The learning process of the virus-learning machine is a virus-cleaning process by simulating manual work, and does not use characteristic codes, which is completely different from those that clean viruses using characteristic codes. The information or knowledge picked up by the virus-learning machine from the standard samples includes: the virus' s size; the virus' s location in the file host; whether the virus is encrypted and transmuted; whether the virus has encrypted the host; whether the virus has damaged the host program too greatly to be cleaned (can only be deleted); whether the virus has relocated the host; whether the virus has aligned the segments of the host; and whether the value or location of key information (such as the entrance of the host program) of the host object have been modified.

For example, for viruses of normal DOS COM types, the virus-learning machine 14 extracts two pieces of knowledge, the first is the virus' s size and the second is whether the original functions of the host object have been kept integral or damaged by the virus. One of the algorithm used to calculate the virus' s size is to subtract size of the standard bait (or host) from that of the standard sample; the algorithm for determining whether original functions of the host object is to run the standard sample in the virtual computer environment created by the computer simulation unit 4 until it is over or the virtual computer is down. If the original functions of the standard bait appear during the process, the original functions of the host object are integral, otherwise they have been destroyed..

Traditional virus-cleaning method using the characteristic codes cleans the virus according to the information (data or codes) in the characteristic libraries of known viruses, which have been filled in by virus analyzers. But the virus-cleaning unit 15 according to this invention is a virus-cleaning unit which simulates manual work and cleans viruses according to the knowledge real-time learned by the virus-learning machine 14 without characteristic code libraries of known viruses. The principle to clean virus is "Who ties, who unties" , that is, the virus sample-creating unit 10 and the virus-learning unit 14 learn the virus' s infection process and analyze the infection results (the standard samples) to acquire the virus' s data and attributes; and a virus' s nature lies in the ability of camouflaging themselves while infecting and promulgating, that is to say, most viruses will not damage the original functions of the host, and if the virus-cleaning unit 15 executes the virus' s virtually, the virus will restores the host object, and the virus-cleaning unit can save the host object restored by the virus to disks as the cleaned object (Corresponding conversions should be made if the object exists in different manners in the memory from that in the disks). When the virus restores the host object must be judged according to the virus' s attributes learned by the virus-learning machine. For example, in one embodiment of the present invention, the method of self-restoring by the virus is one of the methods by which the virus-cleaning unit 15 deduces the converse process of the infecting, i.e., the process of cleaning virus. If the virus-learning machine has learned enough data or attributes of the virus, it calculates the key information (information modified by the virus) of the original host with all the attributes or data so as to clean virus. Real-time learning of the virus and real-time cleaning it with learned knowledge is realized by the virus-cleaning unit 15 is not advantageous over all known anti-virus software products.

In one embodiment of the present invention, the processes that the virus-cleaning unit 15 cleans a normal virus of DOS COM types are as follows: firstly, if the original functions of the standard sample are not integral, the files carrying a virus will be deleted, otherwise the process goes to the next step; secondly, the target file of DOS COM type to be scanned is loaded into the virtual computer circumstance and executed until the value of the program segment register CS in the virtual CPU equals the address of the program segment prefix register and the value of the IP register is 0x0100; thirdly, calculating the size of the cleaned target file , the size of the cleaned DOS COM file is calculated by subtracting size of the virus from that of the infected DOS COM file; fourthly, generating the cleaned target DOS COM file by saving the content of the virtual memory from CS:IP to CS:IP + size of the cleaned DOS COM file as a file.

If the above virus-learning machine 14 fails to obtain knowledge about the virus or the virus-cleaning unit 16 determines that the original functions of the host have been damaged, the target object would be deleted.

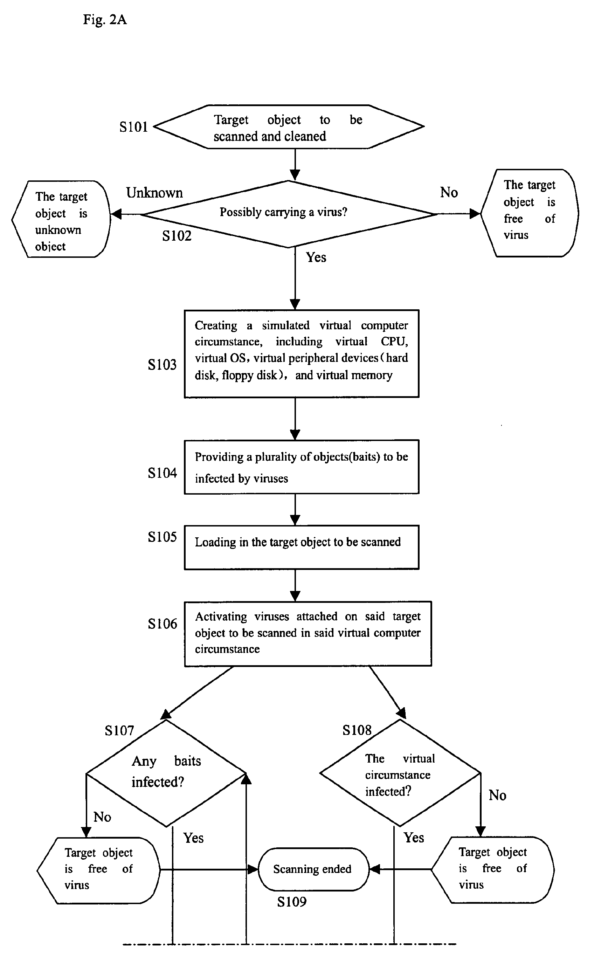

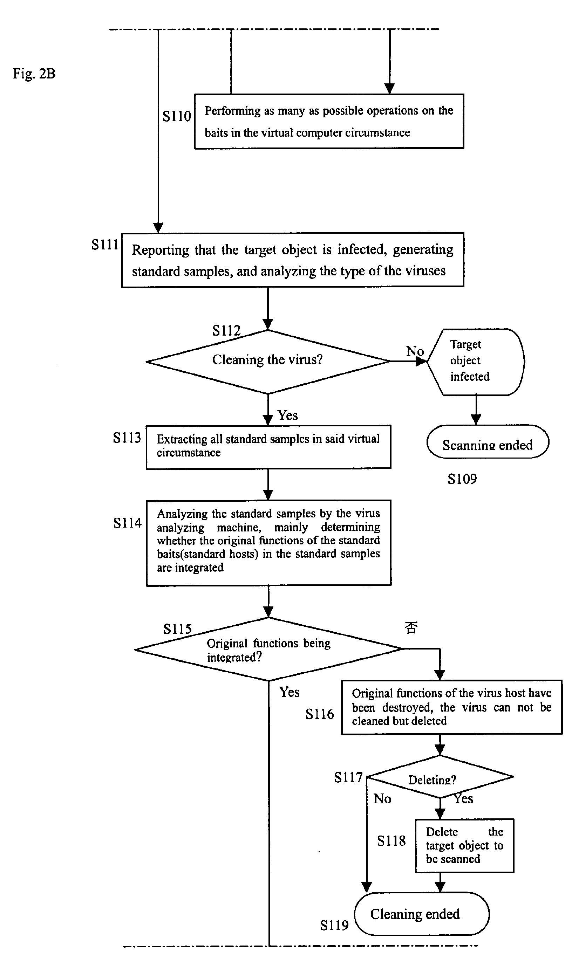

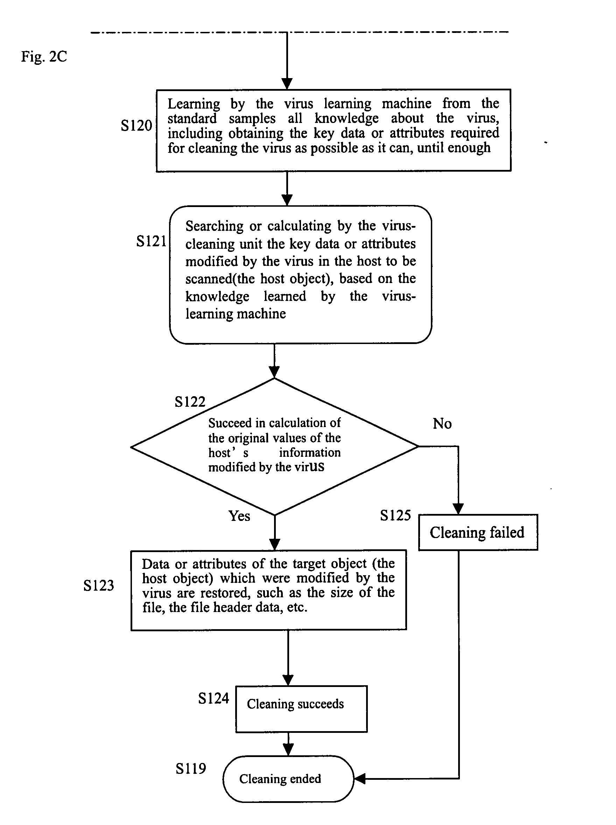

Figure 2A, 2B, and 2C illustrate the processing flow chart of the virus-cleaning method according to one embodiment of the present invention. All steps of this flow chart are executed in the respective processing units of Figure 1 to form a whole virus scanning and cleaning process. As illustrated in Figure 2A, at first, the target object to be scanned 19 is read from the data inputted from the hard disk, the floppy disk or the Internet(step S101), then judgment is made about whether the target object is an object possibly carrying virus (step S102). An object possibly carrying virus is available to be infected by a virus theoretically, but not necessarily carrying a virus. The object possibly carrying virus must be an executable entity, such as *.exe, *.com, *.bat, *.doc, files of NE or PE types, and boot sector or primary boot sector of a disk, and so on. An entity which can not be executed is impossible to carry a virus, such as *.txt.

If in the step S102 the object is determined to be an object possibly carrying virus, the process goes to the step S103 to scan and clean the virus; if the target object is impossible to carry virus, for example, an object that can' t be executed like *.txt, the target object is determined to be clean; if the target object is unknown, the object is reported to be an unknown one.

In the step S103, the computer simulation unit 4 creates a virtual computer circumstance, which includes the virtual CPU, the virtual OS, the virtual peripheral storage devices (a hard disk or floppy disk), the virtual memory, and virtual system time, so as to virtually execute the object possibly carrying virus therein. And in the step S104, a plurality of baits are provided which may be infected by the virus (the standard baits 11 in Figure 1), including the above bait set of file types and the bait set of boot sector type for the virtual hard disk or floppy disk. In the step S105, the target object 19 are loaded into the virtual computer circumstance. In the step S106, the virus possibly attached on the target object is activated, that is, induced to infect the virtual computer circumstance and the bait files. On the one hand, in the step S107, judgment is made whether there is any bait having been infected. On the other hand, in the step S108, judgment is made whether the virtual computer circumstance has been infected, that is, if the virtual memory, the boot sector of the virtual hard disk or the virtual floppy disk has been infected. If in step S107, a bait are judged to have been infected, the process goes to the step S111 in Fig. 2B; otherwise, the target object is reported to be clean. If in the step S108 the virtual circumstance is determined to carry virus, on the process goes to the step S110 in Figure 2B, and as many as possible operations are performed on the baits in the virtual computer circumstance to induce the virus to infect them as possible as it can. After that, the process goes back to S107 to judge again whether there is any bait having been infected.

As shown in Figure 2B, in the step S111 it is reported that the target object to be scanned does carry virus, the standard samples are created, and the virus' s type are analyzed, such as a DOS virus, a MACRO virus, or a boot sector virus. Then the process goes to the step S112 to prompt the user to decide whether the virus should be cleaned. If the user does not need to clean the virus, a report that the target object is infected, and in the step S109, the scanning process is over. Otherwise, if the user needs to clean the virus, the process goes to step S113.

In the step S113, all the standard samples created in the virtual computer circumstance are extracted. And in the step S114, these extracted standard samples are analyzed by the virus-learning machine 14, in which the main part is to judge whether the original functions of the standard samples (the functions of the standard bait) have been changed. In the step S115, the integrality of the standard host' s original functions (functions before the host is infected) is examined. If it is not integrated, the process goes to step S116. Otherwise, the process goes to step S120.

In the step S116, if the original functions of the host have been damaged by the virus are too great to be restored, the host will have to be deleted. In the step S117, the user is inquired if he wants to delete the infected file. If YES, the file is deleted (step S117); otherwise, the virus-cleaning process is ended (step S119).

As illustrated in Figure 2C, in the step S120, the virus-learning machine 14 learns all knowledge concerning the virus and obtain the key data or attributes required for cleaning the virus as possible as it can, until it learns enough. For example, for a DOS COM virus, knowledge of the following sequence is enough: first, the virus is not encrypted, nor transmuted, and its size is not variable; second, the virus' s size virus-size; third, the virus has only changed the first three bytes of the host; fourth, the location where the virus places the first three bytes of the host.

Then in the step S121, the virus-cleaning unit 15 searches or calculates the key data or attributes modified by the virus in the host to be scanned(the host object), based on the knowledge learned by the virus-learning machine 14. For example, for a DOS COM virus, the following information is knew: first, the virus is not encrypted nor transmuted, and its size is not variable; second, the virus' s size; third, the virus has only changed the first three bytes of the host; fourth, the location where the virus places the first three bytes of the host has been known(data_offset_in_virus)(relative to the virus body). Then the steps for cleaning the virus are as follows: first, the location of the virus' s body in the file(virus_offset_in_file) is calculated by subtracting the virus' s size(virus-size) from that of the target file(file_size); second, location of the first three bytes of the host(data_offset_in_file)(relative to the host file) is calculated, which equals the sum of virus_offset_in_file + data_offset_in_virus. ; third, the first three bytes of the host file is replaced by the three bytes data at the location of data_offset_in_file; fourth, the last portion of the infected file is cutoff from the tail by virus_size bytes..

In the step S122, a judgment is made whether the calculation of the original value of the host' s information modified by the virus is successful. If not, the virus-cleaning process fails (step S125); otherwise, the process goes to step S123.

In the step S123, the data or attributes of the target file (the host object) which were modified by the virus are restored, such as the size of the file, and the file header data. Thus, the virus is cleaned.

In the step S124, a report is given that the virus has been cleaned successful. Then the process goes to the step S119 and the virus-cleaning process is ended.

The above virus scanning-cleaning method according to this invention and all the respective units can be realized using normal computer programming languages (such as the C language) to program corresponding software, and the software may be executed in a local computer; or may be stored in the floppy disks so as to be sold or used; or may be transmitted or downloaded through networks or the Internet, and then be executed.

The computer system and the method for scanning-cleaning computer viruses realized by software according to this invention can make use of the basic characteristic of computer viruses, the ability of infection, to detect the virus and real-time learn and use the knowledge about the viruses, which is advantageous over all conventional anti-virus software products. This invention identifies a virus according to its "result" instead of its specific behaviors, so it can be named as the technique according to behavior-result. Of course, the method of this invention also knows both the virus' s behaviors and its results of these behaviors, according to which it can safely clean the virus. But it does not examiner for specific individual behaviors (such as writing to the disk), so it can save much system time, and has a higher speed. Further, this invention only uses a small area of the real memory to provide the virtual circumstance for the virus' s residence and replication, so it has rapid enough processing speed to realize inducement of the virus to infect as possible as it can.

With the computer system and the method according to this invention, most known and unknown viruses will no longer require manual analysis and can be cleaned without the virus characteristic libraries; it can find new emerging viruses in time; the numbers of the viruses it can clean is limitless; and the anti-virus software using this invention will no longer fall behind the viruses, and it can reliably detect and clean unknown viruses.

While the invention has been particularly described with respect to preferred embodiments thereof, it is no meant to limit the scope of the invention. It will be understood by those skilled in the art that various variations or modifications in details may be made without departing from the scope and spirit of the invention. Thus the scope of the invention is to be defined by the attached claims.

The features disclosed in the foregoing description, in the claims and / or in the accompanying drawings may, both separately and in any combination thereof, be material for realising the invention in diverse forms thereof.

## Claims

1. A method for scanning and cleaning computer viruses, comprising the steps of:
simulating in a computer a virtual computer circumstance that the computer viruses reside;
providing a plurality of objects or baits to be infected by computer viruses for inducing virus infection;
loading a target object to be scanned into said simulated virtual computer circumstance;
activating the target object to be scanned in said simulated virtual computer circumstance to induce the viruses possibly attached on said target object to infect the plurality of objects to be infected and generating standard samples which have been infected;
comparing the plurality of objects after processing in the activating step with the plurality of objects to be infected originally provided, determining whether there is any change or not, if yes, the target object to be scanned contains virus, otherwise the target object to be scanned is free of virus.

2. The method according to claim 1, further comprising the steps of:
analyzing and learning from the viruses by analyzing the generated standard samples and extracting information and knowledge on the viruses when it is determined that said target object to be scanned contains a virus; and
cleaning viruses from the infected target object by removing the virus' s body and modifying key information which has been changed by said virus on the basis of said information and knowledge on the viruses and on the basis of the modification that viruses have made to said infected objects, i.e. the baits.

3. The method according to claim 1or 2, wherein said computer simulation step includes providing functional functions to call and execute the steps of:
simulating a Central Processing Unit (CPU) by simulating instructions of the CPU;
simulating an Operating System (OS) by simulating various services and various data structures provided by the OS;
simulating peripheral storage devices by simulating storage space and structures of various peripheral storage devices including simulated hard disk and floppy disk and the like; and
simulating a memory by generating, distributing and managing a simulated memory space.

4. The method according to claim 3, wherein said provided objects to be infected includes all kinds of baits that have different sizes and contents for inducing viruses of different types and various infection conditions, such as, baits of DOS files type for files of DOS COM type to induce viruses of DOS COM type, simulated DOS boot sector for inducing viruses of DOS boot sector type, baits of WORD files type for inducing viruses of macro viruses, and so on.

5. The method according to claim 4, wherein a plurality of baits having different sizes and contents are provided for a given virus type to satisfy the infection conditions of the viruses attached in the target object to be scanned as possible as they can.

6. The method according to claim 5, further comprising the step of simulating the system time to generate virtual system date and time for inducing the viruses that are sensitive to date and time.

7. The method according to claim 6, wherein said simulating OS includes simulating one of operating systems DOS, WINDOWS, and UNIX.

8. The method according to claim 2, wherein in the step of virus cleaning, the virus is virtually ran to restore the original target object from the infected host object, i.e. the target object to be scanned that had been judged to be carrying virus, thus the virus is cleaned.

9. The method according to claim 3, wherein in the step of simulating the peripheral storage device, a small memory space is assigned in the memory to simulate a virtual hard disk, which has the same structure as a normal one, including three-dimension space by sector number, track number and cylinder number, a primary boot sector and corresponding blank sector of the No. 0 track , and next boot sector, File Allocation Table, root directory sector, necessary system files, and bait files for inducing viruses etc..

10. The method according to claim 3, wherein in the step of simulating the peripheral storage device, a small memory space is assigned in the memory to simulate a virtual floppy disk, which has the same structure as a normal one, including a boot sector, a File Allocation Table, a root directory sector, necessary system files, and bait files for inducing viruses etc..

11. A computer system including a general computer for scanning and cleaning computer viruses, comprising:
a computer simulation unit for simulating in the computer a virtual computer circumstance that the computer viruses resides;
a plurality of objects or baits to be infected by computer viruses for inducing virus infection;
a control unit for loading a target object to be scanned into said simulated virtual computer circumstance;
a virus infection inducing unit for activating the target object to be scanned in said simulated virtual computer circumstance to induce the viruses possibly attached on said target object to infect the plurality of objects to be infected and generating standard samples which have been infected; and
a virus decision unit for comparing the plurality of objects after processing in virus infection inducing unit with the plurality of objects to be infected originally provided, determining whether there is any change or not, if yes, the target object to be scanned contains virus, otherwise the target object to be scanned is free of virus.

12. The system according to claim 11, further includes:
a virus analyzing and learning means for analyzing the generated standard samples and extracting information and knowledge on the viruses when it is judged that there is virus; and
a virus cleaning unit for cleaning viruses from the infected target object to be scanned by removing virus' s body and modifying key information which has been changed by said virus according to said information and knowledge on the viruses and on the basis of the modification that viruses have done to said infected objects ,i.e. the baits.

13. The system according to claim 11 or 12, wherein said computer simulation unit includes:
a Central Processing Unit (CPU) simulation unit for simulating instructions of the CPU;
an Operating System (OS) simulation unit for simulating various services and various data structures provided by the OS;
a peripheral storage device simulation unit for simulating storage space and structures of various peripheral storage devices including simulated hard disk, floppy disk and the like; and
a memory simulation unit for generating, distributing and managing a simulated memory space,
wherein said respective units include functional functions available to be called and allocated memory space, and are independent from specific CPU, OS, and peripheral storage devices.

14. The system according to claim 13, wherein said provided objects to be infected includes all kinds of baits that have different sizes and contents for inducing viruses of different types and various infection conditions, such as, baits of DOS files type for files of DOS COM type to induce viruses of DOS COM type, simulated DOS boot sector for inducing viruses of DOS boot sector type, baits of WORD files type for inducing viruses of macro viruses, and so on.

15. The system according to claim 14, wherein a plurality of baits having different sizes and contents are provided for a given virus type to satisfy the infection conditions of the viruses attached in the target object to be scanned as possible as they can.

16. The system according to claim 15, further comprises a system time simulation unit for generating virtual system date and time to induce the viruses that are sensitive to date and time.

17. The system according to claim 16, wherein said OS simulation simulates one of the plurality operating systems DOS, WINDOWS, and UNIX.

18. The system according to claim 12, wherein said virus cleaning unit run the virus to restore the original target object from the infected host object, i.e. the target object to be scanned that had been judged to be carrying virus, thus the virus is cleaned.

19. The system according to claim 13, wherein said peripheral storage devices simulation unit assigns a small memory space in the memory to simulate a virtual hard disk, which has the same structure as a normal one, including three-dimension space by sector number, track number and cylinder number, a primary boot sector and corresponding blank sector of the No. 0 track, and next boot sector, File Allocation Table, root directory sector, necessary system files, and bait files for inducing viruses etc..

20. The system according to claim 13, wherein said peripheral storage devices simulation unit assigns a small memory space in the memory to simulate a virtual floppy disk, which has the same structure as a normal one, including a boot sector, a File Allocation Table, a root directory sector, necessary system files, and bait files for inducing viruses etc.

21. A computer readable recording medium for causing a computer to execute the steps of the method described in any one of claims 1 to 10.

22. A transmission medium for causing a computer to execute the steps of the method described in any one of claims 1 to 10 via network transmission.
